# EUROPÄISCHE PATENTSCHRIFT

(11) **EP 2 491 071 B1**
(45) Veröffentlichungstag und Bekanntmachung des Hinweises auf die Patenterteilung: **16.07.2014**
(21) Anmeldenummer: 10763193.9
(22) Anmeldetag: 08.10.2010
(51) Int. Cl.: C08G 77/04, C08G 77/06

(54) **VERFAHREN ZUR HERSTELLUNG VON ORGANOPOLYSILOXANEN**
PROCESS FOR PREPARING ORGANOPOLYSILOXANES
PROCEDEE POUR LA PRODUCTION DE POLYSILOXANES

(30) Priorität: 22.10.2009 DE 102009045930
(43) Veröffentlichungstag der Anmeldung: 29.08.2012
(73) Patentinhaber: Wacker Chemie AG, 81737 München (DE)
(72) Erfinder: STAIGER, Gerhard, 84375 Kirchdorf (DE)
(74) Vertreter: Mieskes, Klaus Theoderich
(86) Internationale Anmeldenummer: PCT/EP2010/065103
(87) Internationale Veröffentlichungsnummer: WO 2011/047973

(56) Entgegenhaltungen:
- WO-A1-2008/092775

## Beschreibung

Die Erfindung betrifft ein mehrstufiges Verfahren zur Herstellung von Organopolysiloxanen durch Hydrolyse und Kondensation von Chlorsilanen sowie eine Vorrichtung, in der sich der erste Verfahrensschritt vorteilhaft durchführen lässt.

Verfahren zur Herstellung von Organopolysiloxanen sind bereits bekannt. Als zur vorliegenden Erfindung nächstem Stand der Technik sei auf DE 102007004838 A1 und dort zitierte Literatur verwiesen.

In DE 102007004838 A1 wird gezeigt, wie das Molekulargewicht und damit weitere Produkteigenschaften des im erfindungsgemäßen Verfahren hergestellten Organopolysiloxans unter Beibehaltung der übrigen Betriebsparameter durch die im ersten Verfahrensschritt gewählten Bedingungen von Druck und Temperatur gesteuert werden kann. Die übrigen Verfahrensparameter wie insbesondere Stöchiometrie der Einsatzstoffe, Reaktionszeiten etc. werden dabei konstant gehalten, da diese gemäß Stand der Technik ebenfalls die Eigenschaften des Produkts beeinflussen.

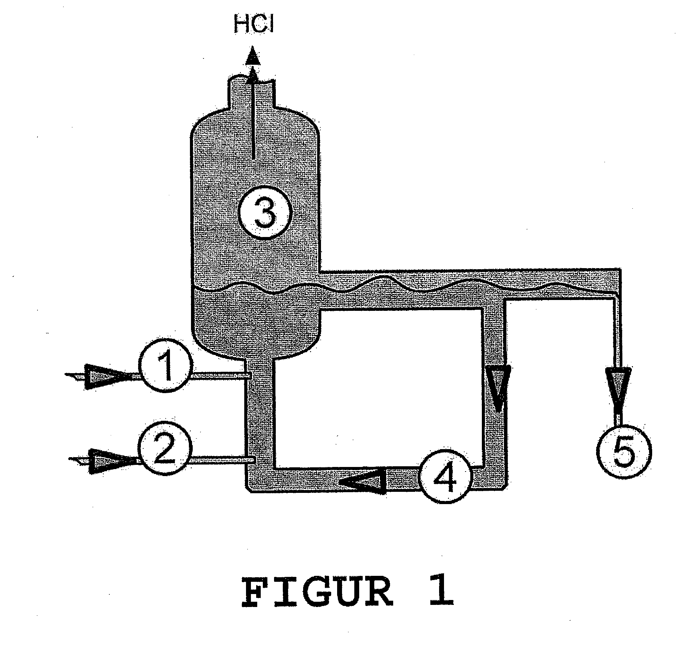

Der erste Verfahrensschritt wird dabei in einem einfachen, kontinuierlich betriebenen Reaktionsloop (siehe Figur 1), der mit Zuleitungen für die Reaktanden, einem Entgasungsbehälter zur Abtrennung der HCl sowie einem Überlauf versehen ist, betrieben. Das kontinuierlich anfallende Reaktionsprodukt ("Teilalkoxylat") wird in einem Pufferbehälter zwischengelagert bevor es im nachfolgenden, diskontinuierlichen Hydrolyseschritt eingesetzt wird.

Nachteilig an dem beschriebenen Verfahren ist, dass ein großer Teil des bei der Hydrolyse freigesetzten Hydrogenchlorids nicht in gasförmiger Form anfällt und so dem HCl-Recycling (Umsetzung mit Methanol zu Methylchlorid) nicht zugeführt werden kann. Das im ersten Schritt erhaltene Zwischenprodukt ("Teilalkoxylat") enthält noch eine erhebliche Menge Alkohol, der nicht mit Chlorsilan reagiert hat, sowie darin gelöstes Hydrogenchlorid ("HCl"). Dies ist unerwünscht, da das im Alkohol gelöste HCl-Gas im nachfolgenden 2. Schritt der Reaktionsfolge mit Wasser noch weiter verdünnt wird und nicht mehr wirtschaftlich in den HCl-Kreislauf zurückgeführt werden kann. Zudem muss es vor der Entsorgung mit Natronlauge neutralisiert werden, was mit weiteren Kosten verbunden ist. Das dabei gebildete NaCl wird anschließend in öffentliche Gewässer eingeleitet und belastet die Umwelt.

Es bestand daher die Aufgabe den Stand der Technik zu verbessern. Das erfindungsgemäße Verfahren löst insbesondere in diesem Zusammenhang 3 Probleme:
1.) Die Einsatzmenge an Alkohol, wie Ethanol bezogen auf Silangemisch zu reduzieren,
2.) den Verlust an nicht wieder rückgewinnbarer HCl zu minimieren und
3.) die Produktionskapazität der Anlage zu steigern. Wesentliche Randbedingung dieser Verfahrensverbesserungen ist es allerdings die Endprodukteigenschaften nicht zu verändern.

Gemäß dem Fachmann geläufiger Anschauung ist allerdings bei Änderung des Einsatzfaktors an Alkohol z. B. Ethanol mit einer Änderung der Endprodukteigenschaften zu rechnen, da das im ersten Schritt erhaltene Zwischenprodukt wesentlich durch den Umsetzungsgrad mit Alkohol, wie Ethanol, (= Alkoxylierungsgrad) charakterisiert ist und dieser maßgeblich die Reaktivität des Zwischenprodukts und damit den Verlauf der weiteren Umsetzung zum Endprodukt und dessen Eigenschaftsprofil bestimmt. So ist bei einer hinsichtlich der Herstellkosten wünschenswerten Verminderung der eingesetzten Alkoholmenge, wie Ethanolmenge mit einem niedrigeren Alkoxylierungsgrad (= höherem Chlorgehalt) des Teilalkoxylats zu rechnen, der zu einer höheren Reaktionsfähigkeit führt (siehe z. B. S. Pawlenko, Houben-Weyl "Methoden der Organischen Chemie", Bd. XIII/5, 4. Auflage, S. 161). Dadurch ist im Hydrolyseschritt mit schnellerer Reaktion, damit höherem Molekulargewicht oder sogar Gelierung zu rechnen.

Überraschenderweise wurde nun gefunden, dass alle vorab beschriebenen Aufgabenstellungen ohne Änderung der Produkteigenschaften gelöst werden können, sofern der erste Reaktionsschritt in einem Kreislaufreaktor ausgeführt wird, der mit einem Heizaggregat ausgestattet ist und der es erlaubt, die Reaktionstemperatur auf vorzugsweise 5°C, 4,5°C, 4,0°C, 3,5°C, 3,0°C, 2,5°C, 2°C, 1,5°C, 1°C, bevorzugt auf 0,5°C, genau zu regeln.

Gegenstand der Erfindung ist ein stehend angeordneter Kreislaufreaktor zur partiellen Alkoxylierung von Chlorsilanen, der getrennte Zuleitungen für Alkohol-Wasser-Gemisch und Silangemisch, ein Entgasungsgefäß, das mit einer Ableitung für das gasförmige Reaktionsprodukt versehen ist, sowie einen Überlauf für die flüssigen Reaktionsprodukte aufweist, dadurch gekennzeichnet, dass der Kreislaufreaktor ein Heizaggregat und eine mit dem Heizaggregat verbundene Regelvorrichtung zur Regelung der Temperatur im Kreislauf aufweist, die es erlaubt, die Temperatur im Reaktionsmedium mit einer Genauigkeit von mindestens 5°C zu regeln, wobei an den Überlauf eine zusätzliche Phasentrenneinheit angeschlossen ist, die die überschüssige Alkoholphase abtrennt und in den Kreislaufreaktor zurückführt.

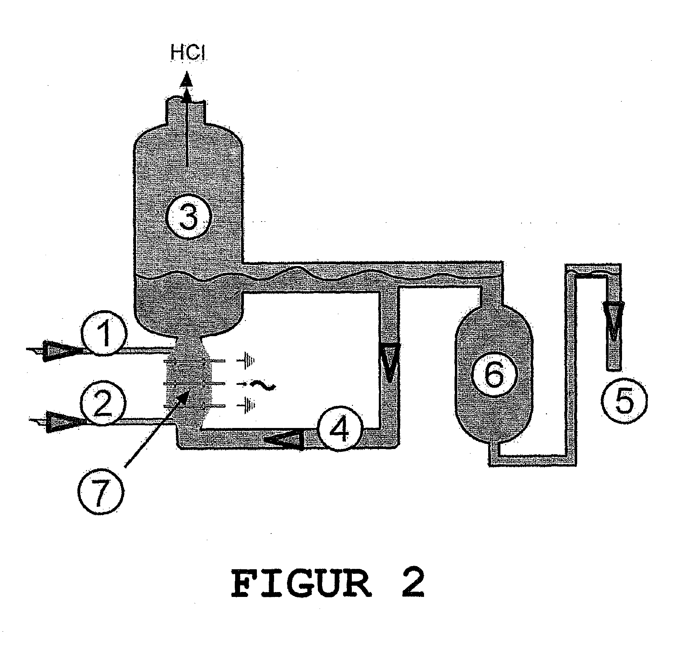

Der erfindungsgemäße Kreislaufreaktor ist ein senkrecht angeordneter Kreislaufreaktor (s. Figur 2), dessen Innenauskleidung aus Materialien besteht, die gegen das bei der Umsetzung von wasserhaltigem Alkohol mit Chlorsilanen entstehende Reaktionsgemisch stabil sind, an dessen senkrechtem Rohrabschnitt Zuleitungen der Reaktanden Alkohol-Wasser-Gemisch und Silan (gegebenenfalls Silangemisch) angebracht sind. Oberhalb dieses Rohrabschnitts befindet sich ein Entgasungsbehälter, der es erlaubt, das bei der Umsetzung gebildete HCl-Gas abzutrennen und der HCl-Rückgewinnung zuzuführen. Die flüssigen Reaktionsprodukte werden durch einen Überlauf aus dem Kreislaufreaktor ausgeschieden.

Das erfindungsgemäße Heizaggregat ist im aufsteigenden Teil des Rohrreaktors, in dem sich auch die Reaktandzuleitungen befinden, lokalisiert, da bei Wärmeeintrag zusätzlich HCl ausgast und so der durch das Ausgasen angetriebene Naturumlauf des Reaktionsgemischs noch verstärkt wird (s. Figur 2). Als Heizaggregate kommen vorzugsweise alle in der chemischen Verfahrenstechnik gebräuchlichen Apparate in Betracht, die es erlauben, Wärmeenergie in ein chemisch reaktives Medium einzutragen. Beispielhaft seien genannt Wärmetauscher, z. B. mit einem Heizmedium (Öl, Dampf) betriebene Rohrbündelwärmetauscher, elektrische Heizelemente (Heizwicklungen, Heizstäbe, Heizkerzen), elektrische Widerstandsheizung in einem leitfähigen Medium, wie es beispielsweise in DE 102006053157 A1 (s. a. US 4296082 A, US 4252602 A, EP 775511 A) beschrieben wurde, sowie Mikrowellenheizung, Induktionsheizung.

Bevorzugt sind konventionelle Wärmetauscher wie Rohrbündelwärmetauscher, die mit kostengünstigen Wärmemedien (Warmwasser, Dampf) betrieben werden können. Besonders bevorzugt ist jedoch im Falle eines elektrisch leitfähigen Reaktionsgemisches eine elektrische Widerstandsheizung. Bei erfindungsgemäßer Umsetzung von Silanen der Formel (I)

RₐSiCl₄₋ₐ (I),

wobei R gleich oder verschieden sein kann und einen einwertigen, SiC-gebundenen, gegebenenfalls substituierten Kohlenwasserstoffrest bedeutet und
a 1, 2, 3 ist,
mit wasserhaltigem Alkohol, wie Ethanol, das vorzugsweise 5 - 30 Gew.% Wasser bevorzugt 8 - 25 Gew.% Wasser, besonders bevorzugt 10 - 20 Gew.% Wasser enthält, entsteht ein elektrisch leitfähiges zweiphasiges Reaktionsmedium, bestehend aus einer mit HCl gesättigten Alkoholphase sowie einer Siloxanphase. Beim Erhitzen der gashaltigen, elektrisch leitenden Alkoholphase mittels Wechselstrom wird nahezu die gesamte Energie in der Flüssigkeit zum Erwärmen genutzt. Es bildet sich kein wärmeisolierender Gasfilm, der die Wärmeübertragung behindert.

Vorzugsweise beträgt die Wechselspannung mindestens 10, insbesondere mindestens 50 V und vorzugsweise höchstens 1000 V. Vorzugsweise beträgt die Frequenz der Wechselspannung mindestens 10, insbesondere mindestens 30 Hz und vorzugsweise höchstens 10000 Hz, insbesondere höchstens 10000 Hz. Wechselstrom schließt auch Drehstrom mit ein.

Der erfindungsgemäße Kreislaufreaktor weist eine Regelvorrichtung auf, die die Temperatur im Reaktionsmedium mit einer Genauigkeit von vorzugsweise 5 °C, in einer bevorzugten Linie von 4,5°C, 4°C, 3,5°C, 3°C, 2,5°C, 2°C, 1,5°C, 1°C, besonders bevorzugt 0,5°C regelt.

Die Materialien der Elektroden müssen elektrisch leitfähig und gegenüber dem Reaktionsmedium beständig sein und bestehen vorzugsweise aus Graphit.

Erfindungsgemäß enthält der erfindungsgemäße Kreislaufreaktor zusätzlich zum Heizaggregat eine Vorrichtung, die geeignet ist, die (leichtere) HCl-gesättigte Alkoholphase des Reaktionsgemisches im Kreislaufreaktor anzureichern. Diese Vorrichtung besteht im einfachsten Fall aus einem Siphon (siehe Figur 2), der an den Überlauf sich anschließt. Der - im Sinne der Fließrichtung des Überlaufs - abfallende Teil des Siphons ist dabei als Phasentrennbehälter mit einem relativen großen Querschnitt ausgeführt. Aufgrund der an dieser Stelle geringen Fließgeschwindigkeit separiert sich die spezifisch leichtere Alkoholphase von der Siloxanphase und reichert sich damit am Überlauf und damit im Kreislaufreaktor an. Damit bleibt auch bei einer Verringerung der Alkoholzugabe die Alkoholkonzentration im Kreislaufreaktor hoch. Der aufsteigende Teil des Siphons wird etwas höher als die Höhe des ursprünglichen Überlaufs geführt. Der Überlauf des Siphons bestimmt nach dem "Prinzip der kommunizierenden Röhren" die Höhe des Flüssigkeitsspiegels im Kreislaufreaktor.

In einer weiteren Ausführungsform einer Vorrichtung zur Alkoholrückführung in den Kreislaufreaktor wird das Produktgemisch der partiellen Alkoxylierung ("Überlauf") vor der Weiterverarbeitung im zweiten Schritt in einem Pufferbehälter zwischengelagert, wo ebenfalls Phasentrennung stattfinden kann. Für den sich anschließenden zweiten Schritt des Verfahrens wird dann nur die Siloxanphase eingesetzt, die Alkoholphase wird in den Kreislaufreaktor zurückgepumpt. Pufferbehälter, Phasentrennvorrichtungen und technische Rückführungsmöglichkeiten sind in diesem Sinne auch als "Alkoholanreicherungseinheit" zu verstehen. Es können auch mehrere Alkoholanreicherungseinheiten kombiniert werden.

Gegenstand der vorliegenden Erfindung ist weiterhin ein Verfahren zur Herstellung von Organopolysiloxanen, bei dem in einem ersten kontinuierlichen Schritt Chlorsilane mit 0,10 bis 0,50 Mol Wasser je Mol hydrolysierbaren Chlors und mit 0,30 bis 1,0 Mol Alkohol je Mol hydrolysierbaren Chlors umgesetzt werden, wobei das Molverhältnis Wasser zu Alkohol 0,13 bis 0,85 beträgt, wobei das Verhältnis wasserhaltiger Alkohol zu Silangemisch im genannten Rahmen so geregelt wird, dass der Anteil der Alkoholphase im Produktgemisch so weit reduziert wird, dass diese im ersten Schrittes 0,1 - 40 Gew.%, beträgt, wobei die Temperatur des Reaktionsmediums durch ein Heizaggregat auf eine Temperatur als Regelgröße erfasst wird, mit einer fest eingestellten Festtemperatur im Bereich von 20 - 60°C als Führungsgröße verglichen wird und mit einer Genauigkeit von 5°C im Sinn einer Angleichung an die Führungsgröße geregelt wird,
dadurch gekennzeichnet, dass
dieser erste Schritt in einem Kreislaufreaktor gemäß Anspruch 1 oder 2 ausgeführt wird,
in einem zweiten Schritt das in der ersten Stufe erhaltene Reaktionsgemisch gegebenenfalls mit einem in Wasser unlöslichen organischen Lösungsmittel mit einer Dichte von unter 0,95 kg/l vermengt und Wasser in Mengen von 0,2 bis 100 mol Wasser je Mol Si-Komponente zudosiert wird und
in eineim dritten Schritt nach Beendigung der Reaktionen des zweiten Schritts die wässrig-alkoholische Phase abgetrennt wird.

In einer bevorzugten Ausführungsform des Verfahrens wird die überschüssige Alkoholphase aus dem Reaktionsprodukt des ersten Schritts abgetrennt und in den Kreislauf zurückgeführt.

Das erfindungsgemäße Verfahren ist weiterhin dadurch gekennzeichnet, dass die Abhängigkeit der Endproduktqualität (z. B. Molekulargewicht, Viskosität) von der im ersten Reaktionsschritt eingesetzten Menge Alkohol unabhängig ist, sofern die Reaktionstemperatur durch das im Kreislaufreaktor eingebaute Heizaggregat auf eine konstante Temperatur mit einer Genauigkeit von vorzugsweise 5 °C, in einer bevorzugten Linie von 4,5°C, 4°C, 3,5°C, 3°C, 2,5°C, 2°C, 1,5°C, 1°C, besonders bevorzugt 0,5°C, geregelt wird. Der Bereich, in dem sich die eingesetzte Alkoholmenge ohne Änderung der Produkteigenschaften verändern, bevorzugt reduzieren, lässt, kann dadurch erweitert werden, indem die Alkoholphase des nach dem ersten Reaktionsschritt erhaltenen Produkts ("Teilalkoxylat") nach Phasenseparation in den Kreislaufreaktor zurückgeführt wird. Dies kann, wie oben beschrieben, vorteilhaft durch Anfügen eines U-förmigen Rohrstücks ("Siphon") an den Überlauf des Kreislaufreaktors erfolgen.

Gegenüber dem Stand der Technik ist es damit möglich, ohne Änderung der Endprodukteigenschaften die Einsatzmenge an Alkohol zu reduzieren. Entsprechend wird die Menge an gelöstem Chlorwasserstoff, die gelöst in der Alkohlphase in die zweite Verfahrensstufe und damit letztendlich in das Abwasser gelangt und nicht wieder der Rückgewinnung zugeführt werden kann, reduziert. Das Ausmaß der Reduktion wird anhand des Anteils Alkoholphase im Reaktionsprodukt des ersten Schritts bestimmt. Die kostengünstigste Fahrweise ist bei einem minimalen Anteil Alkoholphase gegeben. Bei weiterer Reduktion des Alkoholeinsatzes ist mit einer Veränderung der Endprodukteigenschaften zu rechnen.

Die Einsparmöglichkeit an Alkohol liegt bei Verwendung des oben beschriebenen Phasenseparators und Rückführung der Alkoholphase in den Kreislaufreaktor im Bereich von 30 - 50 Gew.%.

Durch die Minimierung der Alkoholphase des ersten Schrittes wird im nachfolgenden kapazitätskritischen Hydrolyseschritt bezogen auf die Siloxanphase weniger Reaktorvolumen benötigt. Dies gilt umso mehr als die Ansatzgröße wesentlich durch das überschüssige Wasser bestimmt ist, das dazu dient, am Ende der Reaktion die HCl-Konzentration zu erniedrigen und die Reaktion abzubrechen. Die HCl-Konzentration sollte danach in der Wasserphase unter 10 Gew.% liegen. Die benötigte Menge Überschußwasser wird wiederum stark durch die über die HCl-gesättigte Alkoholphase eingebrachte HCl bestimmt. Die Verbesserung der Raum-Zeit-Ausbeute liegt im kapazitätskritischen Hydrolyseschritt ("zweiter Schritt" des Verfahrens) bei 30 - 40 %.

Bei den im ersten Schritt des erfindungsgemäßen Verfahrens eingesetzten Chlorsilanen handelt es sich vorzugsweise um solche der Formel

RₐSiCl₄₋ₐ (I),

wobei R gleich oder verschieden sein kann und einen einwertigen, SiC-gebundenen, gegebenenfalls substituierten Kohlenwasserstoffrest bedeutet und a 1, 2, 3 ist.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der α- und der β-Phenylethylrest.

Beispiele für substituierte Reste R sind alle für R oben genannten Reste, die vorzugsweise mit Mercaptogruppen, Carboxygruppen, Ketogruppen, Aryloxygruppen, Acryloxygruppen, Methacryloxygruppen, Hydroxygruppen und Halogengruppen substituiert sein können.

Bevorzugt handelt es sich bei Rest R um Kohlenwasserstoffreste mit 1 bis 8 Kohlenstoffatomen, besonders bevorzugt um den Methylrest.

Beispiele für Silane der Formel (I) sind Methyltrichlorsilan, Dimethyldichlorsilan, Trimethylchlorsilan, Isooctyltrichlorsilan, Phenyltrichlorsilan, Diphenyldichlorsilan und Methylphenyldichlorsilan.

Die im erfindungsgemäßen Verfahren eingesetzten Silane sind bevorzugt bei 20°C und einem Druck von 900 bis 1100 hPa flüssig.

Bevorzugt werden Mischungen von Silanen der Formel (I) mit mindestens einem Trichlorsilan eingesetzt.

Im Rahmen der vorliegenden Erfindung soll unter hydrolysierbarem Chlor das Chlor verstanden werden, das in Form von SiCl-Gruppen vorliegt.

Im ersten Schritt des erfindungsgemäßen Verfahrens werden Chlorsilane mit 0,1 bis 0,5 Mol, Wasser je Mol hydrolysierbarem Chlors umgesetzt.
Im ersten Schritt des erfindungsgemäßen Verfahrens werden Chlorsilane mit bevorzugt 0,3 bis 1,0 Mol, Alkohol je Mol hydrolysierbaren Chlors umgesetzt.

Im ersten Schritt des erfindungsgemäßen Verfahrens wird Wasser zu Alkohol im Molverhältnis von 0,13 bis 0,85 eingesetzt.

Beim erfindungsgemäßen Verfahren wird die eingesetzte Menge Alkohol im ersten Schritt so weit reduziert, dass der Anteil an Alkoholphase im gesamtem Produktgemisch des ersten Schrittes 0,1 - 40 Gew.% bevorzugt 0,1 - 25 Gew.%, besonders bevorzugt 0,1 - 20 Gew.%, ganz besonders bevorzugt 0,1 - 10 Gew.% beträgt.

Beispiele für Alkohole, die im ersten Schritt des erfindungsgemäßen Verfahrens eingesetzt werden können, sind alle bei einer Temperatur von 20°C und einem Druck von 900 bis 1100 hPa flüssigen Alkohole, wie Methanol, Ethanol, n-Propanol, i-Propanol, Butanol, Pentanol, Hexanol, Heptanol, wobei Methanol, Ethanol und Butanol bevorzugt sind und Ethanol besonders bevorzugt ist.

Falls erwünscht, können im ersten Schritt des erfindungsgemäßen Verfahrens zusätzlich zu Chlorsilanen, Wasser und Alkohol auch weitere Stoffe eingesetzt werden. Beispiele für gegebenenfalls eingesetzte weitere Stoffe sind Alkoxysilane, wie Tetraethoxysilan oder wasserunlösliche organische Lösungsmittel, vorzugsweise mit einer Dichte von unter 0,95 kg/l, wie Toluol.

Bei dem erfindungsgemäßen Verfahren lässt sich das Molekulargewicht des Endprodukts (Organopolysiloxans) durch die Reaktionsparameter Abgasdruck und Reaktionstemperatur im ersten Schritt der Herstellungsverfahrens (Alkoxylierungsschritt) steuern. Es wurde jetzt gefunden, dass bei einer vorgegebenen, mittels Heizaggregat konstant gehaltenen (geregelten) Temperatur, die vorzugsweise im Bereich von 20 bis 60°C, bevorzugt von 25 bis 50 °C, besonders bevorzugt 25 bis 45 °C, ganz besonders bevorzugt von 30 - 40°C, liegt, und einem gegebenen mittels Verdichter frei wählbaren Abgasdruck, der vorzugsweise im Bereich von 800 bis 2000 hPa bevorzugt 1000 bis 1500 hPa, besonders bevorzugt 1100 bis 1400 hPa, liegt, die Einsatzmenge an Alkohol reduziert werden kann, ohne dass Molekulargewicht und damit verbundene Eigenschaften wie Viskosität verändert werden.

Im ersten Schritt des erfindungsgemäßen Verfahrens werden Silan oder Mischungen von Silanen in einen Kreislaufreaktor, der mit einem Heizaggregat ausgestattet ist, kontinuierlich zudosiert. Gleichzeitig wird in einer weiteren Zuleitung ein Gemisch aus Wasser und Alkohol kontinuierlich zudosiert, wobei der Wassergehalt des Alkohol vorzugsweise im Bereich von 5 - 30 Gew.%, bevorzugt 8 bis 25 Gew.%, besonders bevorzugt von 10 - 20 Gew.%, liegt. Gegebenenfalls können weitere Stoffe über eine der Zuleitungen eingemischt und gegebenenfalls reagieren gelassen werden. Dabei entstehen Alkoxysilane, Alkoxychlorsilane und deren Hydrolysate und Kondensate sowie in gasförmiger Form Chlorwasserstoff, Alkylchlorid und Dialkylether. Dabei kann das im ersten Schritt anfallende Chlorwasserstoffgas vorzugsweise direkt in anderen Verfahren eingesetzt werden, beispielsweise mit Methanol zur Herstellung von Chlormethan, welches wiederum bei der Methylchlorsilansynthese verwendet wird. So kann das Chlor im Kreis geführt werden, ohne an die Umwelt abgegeben zu werden.

Der erste Schritt des erfindungsgemäßen Verfahrens wird in einem Loop-Reaktor durchgeführt, bevorzugt ohne Eintrag von mechanischer Energie, d.h. nur mit Naturumlauf. Gegenüber dem Stand der Technik ist der Loop-Reaktor zusätzlich mit einem Heizaggregat sowie noch zusätzlich mit einer Phasentrenneinheit, mittels derer gegebenenfalls entstandene HCl-gesättigte Alkoholphase in den Kreislauf rückgeführt werden kann, versehen.

Im Rahmen der vorliegenden Erfindung sollen sich Angaben über die Dichte auf eine Temperatur von 20°C und den Druck der umgebenden Atmosphäre, also 900 bis 1100 hPa, beziehen.

Als in Wasser unlösliche organische Lösungsmittel sollen im Rahmen der vorliegenden Erfindung solche Lösungsmittel verstanden werden, bei denen die Löslichkeit bei 25°C und dem Druck der umgebenden Atmosphäre, also 900 bis 1100 hPa, unter 1 g Lösungsmittel/100 g Wasser liegt.

Beispiele für im erfindungsgemäßen Verfahren gegebenenfalls eingesetzte in Wasser unlösliche organische Lösungsmittel, vorzugsweise mit einer Dichte von unter 0,95 kg/l, sind vorzugsweise gesättigte Kohlenwasserstoffe, wie Pentan, Hexan, Heptan oder Octan sowie deren verzweigte Isomeren und Mischungen der gesättigten Kohlenwasserstoffe und aromatische Kohlenwasserstoffe, wie Benzol, Toluol und Xylole, wobei es sich bevorzugt um Toluol handelt.

Falls im zweiten Schritt des erfindungsgemäßen Verfahrens vorzugsweise wasserunlösliches organisches Lösungsmittel eingesetzt wird, handelt es sich um Mengen von bevorzugt 1 bis 100 Mol, besonders bevorzugt 2 bis 90 Mol, jeweils bezogen auf 1 Mol Silizium-Komponente. Bevorzugt wird im zweiten Schritt in Wasser unlösliches organisches Lösungsmittel eingesetzt.

Falls erwünscht, können im zweiten Schritt des erfindungsgemäßen Verfahrens auch vorzugsweise weitere Stoffe eingesetzt werden. Beispiele für gegebenenfalls eingesetzte weitere Stoffe sind Chlorsilane, wie etwa solche der Formel (I), oder Alkoxysilane, wie z. B. Tetraethoxysilan, oder Alkohole, wie z. B. Ethanol. Falls weitere Stoffe in der zweiten Stufe eingesetzt werden, handelt es sich um Mengen von bevorzugt 0,01 bis 40 Gewichtsteilen, besonders bevorzugt 1 - 20 Gewichtsteile bezogen auf 100 Gewichtsteile der im ersten Schritt eingesetzten Silicium-Komponente.

Im zweiten Schritt des erfindungsgemäßen Verfahrens wird vorzugsweise die Siliciumkomponente des im ersten Schritt erhaltenen Reaktionsgemischs sowie gegebenenfalls eingesetzte weitere Silane bis zum gewünschten Polymerisationsgrad durch gezielte Wasserzugabe hydrolysiert und kondensiert.

In einer bevorzugten Ausführungsform des erfindungsgemäßen Verfahrens wird im zweiten Schritt das im ersten Schritt erhaltene Reaktionsgemisch gegebenenfalls mit Toluol sowie gegebenenfalls mit weiteren Stoffen vermengt und Wasser über einen definierten Zeitraum zudosiert, wobei der Mischungsvorgang vorzugsweise mittels Eintrag von mechanischer Energie, z. B. einem Rührer, durchgeführt wird.

In einer besonders bevorzugten Ausführungsform des erfindungsgemäßen Verfahrens wird der zweite Schritt vorzugsweise in einem Batchreaktor, wie z. B. einem solchen mit einem Innenvolumen von 12 m³, durchgeführt, indem Wasser innerhalb eines Zeitraums von vorzugsweise 5 bis 100 Minuten in den Batchreaktor eindosiert wird, wobei gleichzeitig gerührt wird.

In einer weiteren besonders bevorzugten Ausführungsform des erfindungsgemäßen Verfahrens wird das in der zweiten Stufe eingesetzte Wasser vorzugsweise von oben oberhalb des Füllstandes in den Reaktor dosiert, wobei gleichzeitig gerührt wird.

Der zweite Schritt des erfindungsgemäßen Verfahrens wird vorzugsweise bei einer Temperatur von 0 bis 100°C, insbesondere 20 bis 80°C, und einem Druck von bevorzugt 500 und 2000 hPa, besonders bevorzugt 600 bis 1500 hPa, durchgeführt.

Die im zweiten Schritt ablaufende Hydrolyse- bzw. Kondensationsreaktion kann nach beliebigen und bisher bekannten Verfahren beendet werden, wie vorzugsweise z. B. Verdünnen mit Wasser oder Neutralisation mit Base, wie z. B. Natronlauge.

Im dritten Schritt des erfindungsgemäßen Verfahrens erfolgt die Trennung der gegebenenfalls lösungsmittelhaltigen Siloxanphase von der wässrig-alkoholischen Chlorwasserstoffphase. Dies kann nach dem Fachmann bekannten Methoden erfolgen, wie vorzugsweise z. B. 5 bis 60 minütiges Ruhen lassen des Reaktionsgemisches, bis sich die Phasen separiert haben. Ablassen und aufarbeiten der HCl, Alkohol und wasserhaltigen Phase sowie Abpumpen und Aufarbeiten der siloxanhaltigen Phase.

Die so erhaltene Siloxanphase kann nun vorzugsweise nach beliebigen und an sich bekannten Verfahren aufgearbeitet werden, wie z. B. Neutralisation, Filtration und Abtrennung aller leichtflüchtigen Bestandteile, bevorzugt durch Destillation. Bei den leichtflüchtigen Bestandteilen handelt es sich bevorzugt um cyclische Siloxane und um das in Wasser unlösliche organische Lösungsmittel vorzugsweise mit einer Dichte von unter 0,95 kg/l. Des Weiteren kann man beispielsweise bei der Siloxanphase durch Entfernen des Lösungsmittels, etwa durch Destillation in einem Dünnschichtverdampfer, die Konzentration erhöhen und so Organopolysiloxanlösungen herstellen oder das Lösungsmittel ganz entfernen und so lösemittelfreie Siloxane erhalten.

Nach dem erfindungsgemäßen Verfahren kann eine Vielzahl von Organopolysiloxanen mit definierten Eigenschaften reproduzierbar hergestellt werden, wie z. B. solche, die SiCgebundene Reste, Hydroxyreste und/oder Alkoxyreste enthalten. Insbesondere ist das erfindungsgemäße Verfahren hervorragend geeignet zur Herstellung von Organopolysiloxanharzen.

Die erfindungsgemäß hergestellten Organopolysiloxane können bei 20°C und einem Druck von 900 bis 1100 hPa fest oder flüssig sein und haben ein durchschnittliches Molekulargewicht gegen Polystyrolstandard gemessen von vorzugsweise 162 bis 100 000 g/mol, besonders bevorzugt 800 bis 10 000 g/mol.

Die erfindungsgemäß hergestellten Organopolysiloxane sind vorzugsweise zumindest zum Teil, bevorzugt jedoch ganz, löslich in Alkoxy- und/oder Hydroxysilanen und deren Kondensaten.

Bevorzugt handelt es sich bei den erfindungsgemäß hergestellten Organopolysiloxanen um solche der Formel [RSiO_{3/2}]_{g}[R₂SiO]_{b}[R₃SiO_{1/2}]_{c}[SiO_{4/2}]_{d}[R¹O_{1/2}]ₑ[HO_{1/2}]_{f} mit R gleich Methyl-, Isooctyl- oder Phenylrest, R¹ gleich Methyl-, Ethyl- oder Butylrest, g=2-200, b=0-100, c=0-50, d=0-10, e=0-20 und f=0-10.

Beispiele für die erfindungsgemäß hergestellten Organopolysiloxane sind [MeSiO_{3/2}]₇₂[Me₂SiO]₂₄[EtO_{1/2}]_{2,8}[HO_{1/2}]_{0,4}, [MeSiO_{3/2}]_{12,2}[Me₂SiO]_{3,3}[Me₃SiO_{1/2}]_{1,40,6}[HO_{1/2}]_{0,18}, [MeSi0_{3/2}]_{15,3}[Me₂SiO]_{2,6}[Me₃SiO_{1/2}]₁[IOSiO_{3/2}]_{0,8}[MeO_{1/2}]₂[HO_{1/2}]_{0,3} und [PhSiO_{3/2}]_{9,8}[Me₂SiO]₂[MeO_{1/2}]_{1,8}[BuO_{1/2}]_{0,04}[HO_{1/2}]_{0,18}, wobei Me gleich Methylrest, Et gleich Ethylrest, IO gleich Isooctylrest, Ph gleich Phenylrest und Bu gleich Butylrest bedeutet.

Die erfindungsgemäß hergestellten Organopolysiloxane können für alle Zwecke verwendet werden, für die auch bisher Organopolysiloxane eingesetzt worden sind, wie z. B. im Bautenschutz, im Coating-Bereich, in Kosmetik-Produkten, im Bereich Textil sowie Papier. Insbesondere eignen sie sich zur Herstellung von Emulsionen und als Bindemittel zur Herstellung von Farben und Lacke.

Das erfindungsgemäße Verfahren hat den Vorteil, dass es einfach in der Durchführung ist und Organopoylsiloxane mit einer hohen Ausbeute hergestellt werden können.

Das erfindungsgemäße Verfahren hat den Vorteil, dass das gegebenenfalls verwendete wasserunlösliche organische Lösungsmittel, der Chlorwasserstoff sowie der Alkohol auf einfache Weise rückgewonnen werden können.

Das erfindungsgemäße Verfahren hat gegenüber dem Stand der Technik den Vorteil, dass die Alkoholphase des Teilalkoxylats im Vergleich zur Siloxanphase kleiner geworden ist und somit größere Hydrolyseansätze möglich sind und damit bestehende Apparaturen eine größere Fertigungskapazität erreichen.

Mit Hilfe des erfindungsgemäßen Verfahrens werden Organopolysiloxane erhalten, welche eine hohe Lagerstabilität aufweisen, sehr chloridarm sind, einen geringen VOC Gehalt aufweisen und sehr kostengünstig herstellbar sind.

Des Weiteren hat das Verfahren den Vorteil, dass bei Umgebungstemperatur feste Organopolysiloxane mit einer Glasübergangstemperatur (Tg) von bis zu 55°C (Aufheizrate 6°C pro Minute) herstellbar sind.

### FIGUREN

### Figur 1

In Figur 1 ist schematisch ein Kreislaufreaktor gemäß Stand der Technik dargestellt. Der Kreislaufreaktor zur partiellen Alkoxylierung von Chlorsilanen, weist getrennte Zuleitungen für Alkohol-Wasser-Gemisch 1 und Silangemisch 2, ein Entgasungsgefäß 3, das mit einer Ableitung für das gasförmige Reaktionsprodukt versehen ist, dem Loop 4 sowie einem Überlauf für die flüssigen Reaktionsprodukte 5 auf.

### Figur 2

In Figur 2 ist schematisch der erfindungsgemäße Kreislaufreaktor dargestellt. Der Kreislaufreaktor zur partiellen Alkoxylierung von Chlorsilanen, weist getrennte Zuleitungen für Alkohol-Wasser-Gemisch 1 und Silangemisch 2, ein Entgasungsgefäß 3, das mit einer Ableitung für das gasförmige Reaktionsprodukt versehen ist, ein Heizaggregat 7 einschließlich einer Regeleinrichtung sowie eine Phasenanreicherungseinheit 6, dem Loop 4 sowie einem Überlauf für die flüssigen Reaktionsprodukte 5 auf.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und sofern nicht anders angegeben bei Raumtemperatur, also etwa 20°C bzw. einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

### Beispiel 1 (Referenzbeispiel)

In eine kontinuierlich betriebene Reaktionsloop mit einem Innenvolumen von 1,35 m³, von dem 0,85 m³ Entgasungsvolumen darstellen, und Naturumlauf werden kontinuierlich 1000 kg/h eines Chlorsilangemisches aus 800 kg/h Methyltrichlorsilan und 200 kg/h Dimethyldichlorsilan und 700 kg/h eines Gemisches aus Ethanol 638 kg/h und Wasser 62 kg/h zudosiert. Die Reaktionstemperatur beträgt 30°C, der Überdruck beträgt 100 mbar und die mittlere Verweilzeit der Siloxanphase 20-24 Minuten. Während der Reaktion werden 300-350 kg/h Chlorwasserstoff freigesetzt, welcher der Chlorwasserstoff Rückgewinnungsanlage zugeführt wird.

Zur Hydrolyse/Kondensation werden 2500 kg des so erhaltenen HCl-konzentrierten Teilalkoxylates, das aus ca. 1250 kg Siloxanphase und ca. 1250 kg Ethanol/HCl-Phase besteht, mit 3000 kg Toluol in einem Batch Reaktor mit einem Innenvolumen von 12 m³ vorgelegt und 510 kg Wasser innerhalb von 75 Minuten unter guter Durchmischung zudosiert. Die Reaktionstemperatur beträgt bis zu 60°C, der Überdruck übersteigt nicht den im 1. Teilschritt der Reaktion erreichten Überdruck.

Danach wird die Säurekonzentration durch Zugabe von 3050 kg Wasser auf ein unreaktives Maß reduziert (HCl-Gehalt in der Säure-, Ethanol-, Wasserphase unter 14 Gew.-%). Nach sorgfältiger Durchmischung von 5 bis 15 Minuten wird das Gemisch in einen 12 m³ großen Behälter abgelassen und 60 Minuten ruhen gelassen.

Anschließend wird die Ethanol/Chlorwasserstoff/wasserhaltige Phase von der toluolischen Siloxanphase getrennt.

In weiteren Aufarbeitungsschritten wird die toluolische Harzphase in einer mit Füllkörpern betriebenen Destillationskolonne (Sumpftemperatur 114°C, Sumpfüberdruck 100 mbar, Verweilzeit 60 Minuten) auf einen höheren Festgehalt aufkonzentriert, mit Natriumbicarbonat neutralisiert, mit Aktivkohle von katalytisch wirksamen Metallspuren befreit und anschließend über Filterhilfsmittel filtriert und am Dünnschichtverdampfer (120-200°C) und 50 bis 100 mbar Vakuum von flüchtigen Bestandteilen befreit. Das im Reaktionsschritt der Aufkonzentration und Dünnschichten anfallende Toluol wird im zweiten Reaktionsschritt wieder eingesetzt. Die saure ethanolisch/wässrige Phase aus dem dritten Schritt (Phasentrennung) wird nach alkalisch stellen redestilliert und im ersten Reaktionsschritt wieder eingesetzt.

Es wird ein Organopolysiloxan mit einer gemäß 1H-, 29Si-NMR und GPC-Spektroskopie (gegen Polystyrolstandard gemessen, unter Berücksichtigung des Gewichtsmittels Mw) durchschnittlichen Summenformel [MeSiO3/2]72[Me2SiO2/2]23,9[EtO1/2]2,8[HO1/2]0,4 erhalten.

### Beispiel 2

In einen erfindungsgemäßen Kreislaufreaktor mit einem Innenvolumen von 1,35 m³, von dem 0,85 m³ Entgasungsvolumen darstellen, und Naturumlauf, der mit einer elektrischen Widerstandsheizung entsprechend DE102006053157 A1 ausgestattet ist, die mit einer Heizleistung von bis zu 50 kW betrieben wird, und der zusätzlich mit einem Phasentrenngefäß zur Anreicherung der Ethanolphase im Kreislauf, wie in Figur 2 Bauteil(6) dargestellt, versehen ist, werden kontinuierlich 1000 kg/h eines Chlorsilangemisches aus 800 kg/h Methyltrichlorsilan und 200 kg/h Dimethyldichlorsilan und 450 kg/h eines Gemisches aus Ethanol (360 kg/h) und Wasser (90 kg/h) zudosiert. Die Reaktionstemperatur wird mittels Heizung auf 30°C geregelt, der Überdruck beträgt 100 mbar und die mittlere Verweilzeit der Siloxanphase 20-24 Minuten. Während der Reaktion werden 550-600 kg/h Chlorwasserstoff freigesetzt, welcher der Chlorwasserstoff Rückgewinnungsanlage zugeführt wird.

Zur Hydrolyse/Kondensation werden 2500 kg des so erhaltenen HCl-konzentrierten Teilalkoxylates, das aus ca. 2100 kg Siloxanphase und ca. 400 kg Ethanol/HCl-Phase besteht, mit 3900 kg Toluol in einem Batch Reaktor mit einem Innenvolumen von 12 m³ vorgelegt und 560 kg Wasser innerhalb von 75 Minuten unter guter Durchmischung zudosiert. Die Reaktionstemperatur beträgt bis zu 60°C, der Überdruck übersteigt nicht den im 1. Teilschritt der Reaktion erreichten Überdruck.

Danach wird die Säurekonzentration durch Zugabe von 2950 kg Wasser auf ein unreaktives Maß reduziert (HCl-Gehalt in der Säure-, Ethanol-, Wasserphase unter 14 Gew.-%). Nach sorgfältiger Durchmischung von 5 bis 15 Minuten wird das Gemisch in einen 12 m³ großen Behälter abgelassen und 60 Minuten ruhen gelassen.

Somit werden im gleichen Zeitraum wie im Vergleichsbeispiel 1 2100 kg Siloxanphase (Vergleichsbeispiel 1: 1250 kg) umgesetzt. Anschließend wird die Ethanol/Chlorwasserstoff/wasserhaltige Phase von der toluolischen Siloxanphase getrennt.

In weiteren Aufarbeitungsschritten wird die toluolische Harzphase in einer mit Füllkörpern betriebenen Destillationskolonne (Sumpftemperatur 114°C, Sumpfüberdruck 100 mbar, Verweilzeit 60 Minuten) auf einen höheren Festgehalt aufkonzentriert, mit Natriumbicarbonat neutralisiert, mit Aktivkohle von katalytisch wirksamen Metallspuren befreit und anschließend über Filterhilfsmittel filtriert und am Dünnschichtverdampfer (120-200°C) und 50 bis 100 mbar Vakuum von flüchtigen Bestandteilen befreit. Das im Reaktionsschritt der Aufkonzentration und Dünnschichten anfallende Toluol wird im zweiten Reaktionsschritt wieder eingesetzt. Die saure ethanolisch/wässrige Phase aus dem dritten Schritt (Phasentrennung) wird nach alkalisch stellen redestilliert und im ersten Reaktionsschritt wieder eingesetzt.

Es wird ein Organopolysiloxan mit einer gemäß 1H-, 29Si-NMR und GPC-Spektroskopie (gegen Polystyrolstandard gemessen, unter Berücksichtigung des Gewichtsmittels Mw) durchschnittlichen Summenformel [MeSiO3/2]72[Me2SiO2/2]23,9[EtO1/2]2,8[HO1/2]0,4 erhalten.

## Patentansprüche

1. Stehend angeordneter Kreislaufreaktor zur partiellen Alkoxylierung von Chlorsilanen, der getrennte Zuleitungen für Alkohol-Wasser-Gemisch und Silangemisch, ein Entgasungsgefäß, das mit einer Ableitung für das gasförmige Reaktionsprodukt versehen ist, sowie einen Überlauf für die flüssigen Reaktionsprodukte aufweist, **dadurch gekennzeichnet, dass** der Kreislaufreaktor ein Heizaggregat am aufsteigenden Teil des Rohrreaktors und eine mit dem Heizaggregat verbundene Regelvorrichtung zur Regelung der Temperatur im Kreislauf aufweist, die es erlaubt, die Temperatur im Reaktionsmedium mit einer Genauigkeit von mindestens 5°C zu regeln, wobei an den Überlauf eine zusätzliche Phasentrenneinheit angeschlossen ist, die die überschüssige Alkoholphase abtrennt und in den Kreislaufreaktor zurückführt.

2. Kreislaufreaktor gemäß Anspruch 1, **dadurch gekennzeichnet, dass** die Regelvorrichtung die Temperatur im Reaktionsmedium mit einer Genauigkeit von 0,5°C regelt.

3. Verfahren zur Herstellung von Organopolysiloxanen, bei dem in einem ersten kontinuierlichen Schritt Chlorsilane mit 0,10 bis 0,50 Mol Wasser je Mol hydrolysierbaren Chlors und mit 0,30 bis 1,0 Mol Alkohol je Mol hydrolysierbaren Chlors umgesetzt werden, wobei das Molverhältnis Wasser zu Alkohol 0,13 bis 0,85 beträgt, wobei das Verhältnis wasserhaltiger Alkohol zu Silangemisch im genannten Rahmen so geregelt wird, dass der Anteil der Alkoholphase im Produktgemisch so weit reduziert wird, dass diese im ersten Schrittes 0,1 - 40 Gew.% beträgt, wobei die Temperatur des Reaktionsmediums durch ein Heizaggregat auf eine Temperatur als Regelgröße erfasst wird, mit einer fest eingestellten Festtemperatur im Bereich von 20 - 60°C als Führungsgröße verglichen wird und mit einer Genauigkeit von 5°C im Sinn einer Angleichung an die Führungsgröße geregelt wird,
**dadurch gekennzeichnet, dass**
dieser erste Schritt in einem Kreislaufreaktor gemäß Anspruch 1 oder 2 ausgeführt wird,
in einem zweiten Schritt das in der ersten Stufe erhaltene Reaktionsgemisch gegebenenfalls mit einem in Wasser unlöslichen organischen Lösungsmittel mit einer Dichte von unter 0,95 kg/l vermengt und Wasser in Mengen von 0,2 bis 100 mol Wasser je Mol Si-Komponente zudosiert wird und
in einem dritten Schritt nach Beendigung der Reaktionen des zweiten Schritts die wässrig-alkoholische Phase abgetrennt wird.

4. Verfahren nach Anspruch 3, **dadurch gekennzeichnet, dass** die eingesetzte Menge Alkohol so weit reduziert wird, dass der Anteil an Alkoholphase im gesamten Produktgemisch des ersten Schrittes 0,1 - 25 Gew.% beträgt.

5. Verfahren nach einem oder mehreren der vorherigen Ansprüche, **dadurch gekennzeichnet, dass** die Temperatur auf eine bestimmte Temperatur von 25 bis 45 °C geregelt wird.

6. Verfahren nach einem oder mehreren der vorherigen Ansprüche, **dadurch gekennzeichnet, dass** im zweiten Schritt in Wasser unlösliches Lösungsmittel eingesetzt wird.

## Claims

1. Upright circulation reactor for the partial alkoxylation of chlorosilanes, which has separate feed lines for alcohol/water mixture and silane mixture, a degassing vessel, which is provided with a discharge line for the gaseous reaction product, and also an overflow for the liquid reaction products, **characterized in that** the circulation reactor has a heating apparatus on the ascending part of the tube reactor and a regulating device which is connected to the heating apparatus and serves to regulate the temperature in the circuit and allows the temperature in the reaction medium to be regulated to a precision of at least 5°C, with an additional phase separation unit which separates off the excess alcohol phase and recirculates it to the circulation reactor being connected to the overflow.

2. Circulation reactor according to Claim 1, **characterized in that** the regulating device regulates the temperature in the reaction medium to a precision of 0.5°C.

3. Process for preparing organopolysiloxanes, in which
in a first continuous step chlorosilanes are reacted with from 0.10 to 0.50 mol of water per mol of hydrolyzable chlorine and with from 0.30 to 1.0 mol of alcohol per mol of hydrolyzable chlorine, where the molar ratio of water to alcohol is from 0.13 to 0.85, the ratio of water-containing alcohol to silane mixture is regulated within the abovementioned range so that the proportion of alcohol phase in the product mixture is reduced to such an extent that said proportion in the first step is 0.1-40% by weight, and the temperature of the reaction medium is measured by means of a heating apparatus to a temperature as regulated variable, compared with a fixed temperature in the range 20-60°C as controlled variable and regulated with a precision of 5°C to match the controlled variable, **characterized in that** said first step is carried out in a circulation reactor according to Claim 1 or 2,
in a second step the reaction mixture obtained in the first stage is optionally mixed with a water-insoluble organic solvent having a density of less than 0.95 kg/l and water is added in an amount of from 0.2 to 100 mol of water per mol of Si component and
in a third step, after the reactions of the second step are concluded, the aqueous-alcoholic phase is separated off.

4. Process according to Claim 3, **characterized in that** the amount of alcohol used is reduced to such an extent that the proportion of alcohol phase in the total product mixture from the first step is 0.1-25% by weight.

5. Process according to one or more of the preceding claims, **characterized in that** the temperature is regulated to a particular temperature in the range from 25 to 45°C.

6. Process according to one or more of the preceding claims, **characterized in that** a water-insoluble solvent is used in the second step.

## Revendications

1. Réacteur à circulation disposé verticalement pour l'alcoxylation partielle de chlorosilanes, qui présente des conduites d'alimentation séparées pour un mélange alcool-eau et un mélange de silanes, un récipient de dégazage, qui est équipé d'une conduite d'évacuation pour le produit de réaction gazeux, ainsi qu'une surverse pour les produits de réaction liquides, **caractérisé en ce que** le réacteur à circulation présente un appareil de chauffage dans la partie ascendante du réacteur tubulaire et un dispositif de régulation relié à l'appareil de chauffage, destiné à réguler la température dans le circuit, qui permet de réguler la température dans le milieu réactionnel à une précision d'au moins 5°C, une unité de séparation de phases supplémentaire étant raccordée à la surverse, qui sépare la phase d'alcool en excès et la recycle dans le réacteur à circulation.

2. Réacteur à circulation selon la revendication 1, **caractérisé en ce que** le dispositif de régulation régule la température dans le milieu réactionnel à une précision de 0,5°C.

3. Procédé pour la préparation d'organopolysiloxanes, dans lequel, dans une première étape continue, on transforme des chlorosilanes avec 0,10 à 0,50 mole d'eau par mole de chlore hydrolysable et avec 0,30 à 1,0 mole d'alcool par mole de chlore hydrolysable, le rapport molaire d'eau à alcool étant de 0,13 à 0,85, le rapport d'alcool aqueux au mélange de silanes étant régulé dans le cadre mentionné de manière telle que la proportion de phase d'alcool dans le mélange de produits est réduite de manière telle qu'elle représente, dans la première étape, 0,1-40% en poids, la température du milieu réactionnel chauffé par un appareil de chauffage à une température donnée étant détectée comme grandeur de régulation, comparée à une température fixe réglée de manière définie dans la plage de 20-60°C comme grandeur de commande et régulée à une précision de 5°C dans le sens d'un alignement sur la grandeur de commande, **caractérisé en ce que** cette première étape est réalisée dans un réacteur à circulation selon la revendication 1 ou 2, dans une deuxième étape, on mélange, le cas échéant, au mélange réactionnel obtenu dans la première étape, un solvant organique insoluble dans l'eau présentant une densité inférieure à 0,95 kg/l et on ajoute en dosant de l'eau en des quantités de 0,2 à 100 moles d'eau par mole de composant Si et on sépare, dans une troisième étape, après la fin des réactions de la deuxième étape, la phase aqueuse-alcoolique.

4. Procédé selon la revendication 3, **caractérisé en ce que** la quantité d'alcool utilisée est réduite jusqu'à ce que la proportion de phase d'alcool dans le mélange de produits total de la première étape soit de 0,1-25% en poids.

5. Procédé selon l'une ou plusieurs des revendications précédentes, **caractérisé en ce que** la température est régulée à une température déterminée de 25 à 45°C.

6. Procédé selon l'une ou plusieurs des revendications précédentes, **caractérisé en ce qu'**on utilise, dans la deuxième étape; un solvant insoluble dans l'eau.
